# EUROPEAN PATENT SPECIFICATION

(11) **EP 3 731 130 B1**
(45) Date of publication and mention of the grant of the patent: **05.06.2024**
(21) Application number: 19170527.6
(22) Date of filing: 23.04.2019
(51) Int. Cl.: G06V 20/00, G06F 18/25

(54) **APPARATUS FOR DETERMINING AN OCCUPANCY MAP**
VORRICHTUNG ZUR BESTIMMUNG EINER BELEGUNGSKARTE
APPAREIL POUR DÉTERMINER UNE CARTE D'OCCUPATION

(43) Date of publication of application: 28.10.2020
(73) Proprietor: Continental Autonomous Mobility Germany GmbH, 85057 Ingolstadt (DE)
(72) Inventor: Plaza, Victoria, Lewes, BN7 2SA (GB); Sell, Martin, Brighton, BN1 5NH (GB)
(74) Representative: Continental Corporation

(56) References cited:
- US-A1- 2014 058 610
- H. MORAVEC ET AL: "High resolution maps from wide angle sonar", PROCEEDINGS. 1985 IEEE INTERNATIONAL CONFERENCE ON ROBOTICS AND AUTOMATION, vol. 2, 1 January 1985 (1985-01-01), pages 116-121, XP055147423, DOI: 10.1109/ROBOT.1985.1087316

## Description

### FIELD OF THE INVENTION

The present invention relates to an apparatus for determining an occupancy map, a system for determining an occupancy map, a method for determining an occupancy map, as well as to a computer program element and a computer readable medium.

### BACKGROUND OF THE INVENTION

The general background of this invention is the field of advanced driving assistance systems and their development.

Lidars or other depth sensors (ultrasonic, radars, stereo vision, etc) are used for capturing the surrounding scenario as a point cloud. With consecutive captures, from several points of view (when the sensor is in a mobile platform, such a car, with a location system, such odometry, all the point clouds are accumulated knowing the motion of the mobile platform and merged into just one occupancy 3D map. Usually this 3D map is reduced into a TOP-down projection or binary occupancy map, termed a 2D map. Some of the depth sensors have no vertical resolution, so they are 2D depth sensors instead of 3D, for example a 2D laser scanner, or ultrasonic scanner. These occupancy maps, in 3D or 2D, are then used as ground truth for comparing and evaluate ADAS algorithms, which reconstruct 3D information based on images, for example Structure From Motion (SFM), Geometric Depth Reconstruction (GDR). Scores obtained from such comparison (called KPI) can be useful information for two reasons: to compare alternative algorithms or versions of the same one; indicate the performance of algorithms.

However, occupancy maps generated by depth sensors, both 3D and 2D, do not contain enough information to be considered as an accurate ground truth data for the evaluation of such algorithms.

There is a need to address this issue.

H. Moravec and A. Elfes: "High resolution maps from wide angle sonar.", In Proceedings 1985 IEEE international conference on robotics and automation, vol. 2, pp. 116-121. IEEE, 1985, discloses a sonar-based mapping system developed for mobile robot navigation. In this method a number of measurements is obtained from multiple sonar units. Each measurement provides information about empty and possibly occupied volumes in the space subtended by the beam (a thirty degree cone for the present sensors). This occupancy information is projected onto a rasterized two dimensional horizontal map. Sets of readings taken both from different sensors and from different positions of the robot are progressively incorporated into the sonar map. As more readings are added the area deduced to be empty expands, and the expanding empty area encroaches on and sharpens the possibly occupied region. Object movement and dynamic object areas are not considered by the aforementioned method.

US201405861 0A1 discloses a method and apparatus for simultaneous localization and mapping of mobile robot environment. Herein, techniques that optimize performance of simultaneous localization and mapping (SLAM) processes for mobile devices, typically a mobile robot. In one embodiment, erroneous particles are introduced to the particle filtering process of localization. Monitoring the weights of the erroneous particles relative to the particles maintained for SLAM provides a verification that the robot is localized and detection that it is no longer localized. In another embodiment, cell-based grid mapping of a mobile robot's environment also monitors cells for changes in their probability of occupancy. Cells with a changing occupancy probability are marked as dynamic and updating of such cells to the map is suspended or modified until their individual occupancy probabilities have stabilized. In another embodiment, mapping is suspended when it is determined that the device is acquiring data regarding its physical environment in such a way that use of the data for mapping will incorporate distortions into the map, as for example when the robotic device is tilted.

### SUMMARY OF THE INVENTION

The object of the present invention is solved with the subject matter of the independent claims, wherein further embodiments are incorporated in the dependent claims.

In a first aspect, there is provided an apparatus for determining an occupancy map according to claim 1.

In this manner, an occupancy map for the testing and evaluation of ADAS algorithms is further improved because information is provided that accounts for movement of the object. Thus, existing occupancy maps can indicate that parts of an object are at two locations, whereas the object has actually moved during sensor data acquisition to build the occupancy map. However, in the past an ADAS algorithm tested on this data would lead to an incorrect evaluation because it could indicate that there is no object located at a position when the object was there but has moved. Thus now, in providing a further qualified region of space, that being dynamic object space, algorithm testing and evaluation can take this into account during performance testing.

In a second aspect, there is provided a system for determining an occupancy map according to claim 6.

According to another aspect, there is provided a computer program element controlling apparatus as previously described which, when the computer program element is executed by a processing unit, is adapted to perform the method steps as previously described.

According to another aspect, there is also provided a computer readable medium having stored the computer element as previously described.

Advantageously, the benefits provided by any of the above aspects equally apply to all of the other aspects and vice versa.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows an example of determination of an occupancy map;
Fig. 2 shows an example of steps in the determination of the occupancy map of Fig. 1;
Fig. 3 shows an example of part of a step in the determination of an occupancy map; and
Fig. 4 shows an example of 3D data being transformed into 2D data.

### DETAILED DESCRIPTION OF EMBODIMENTS

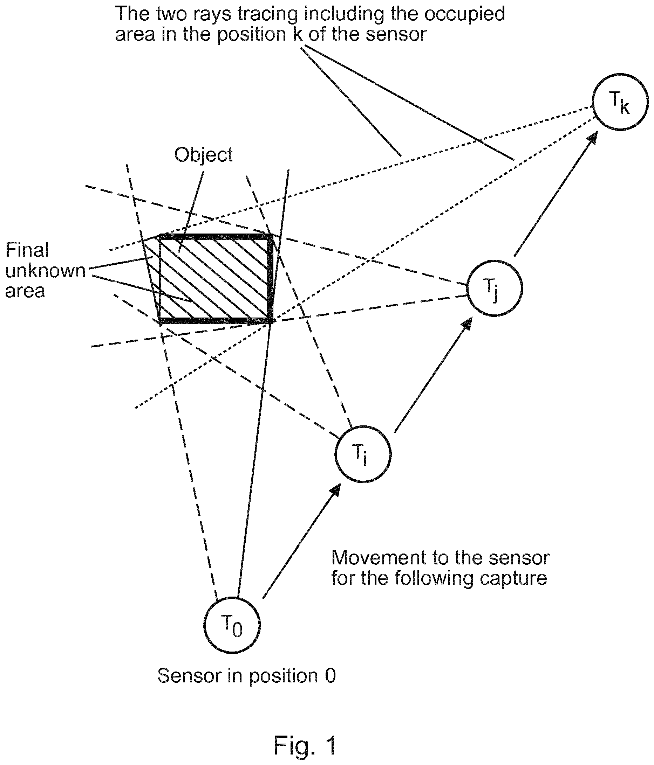

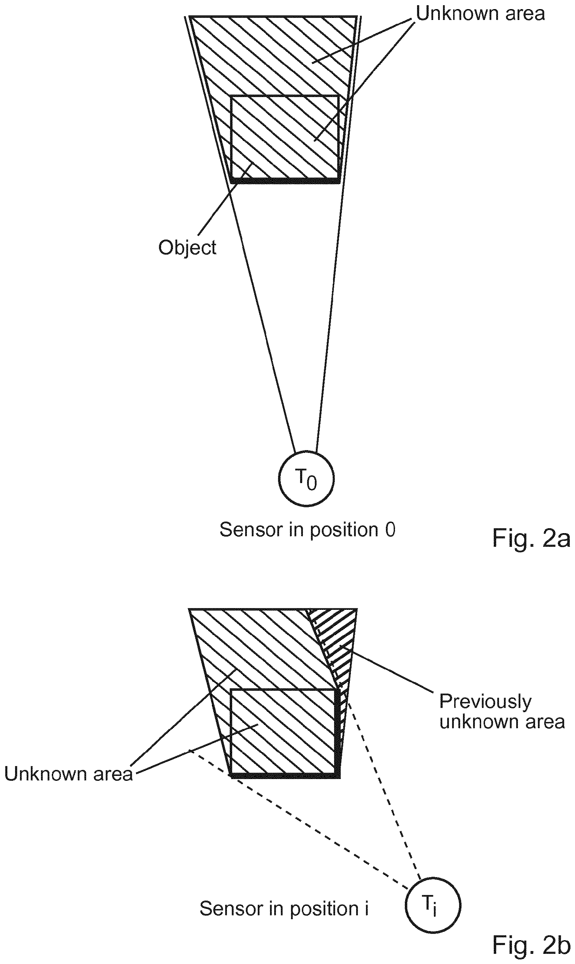

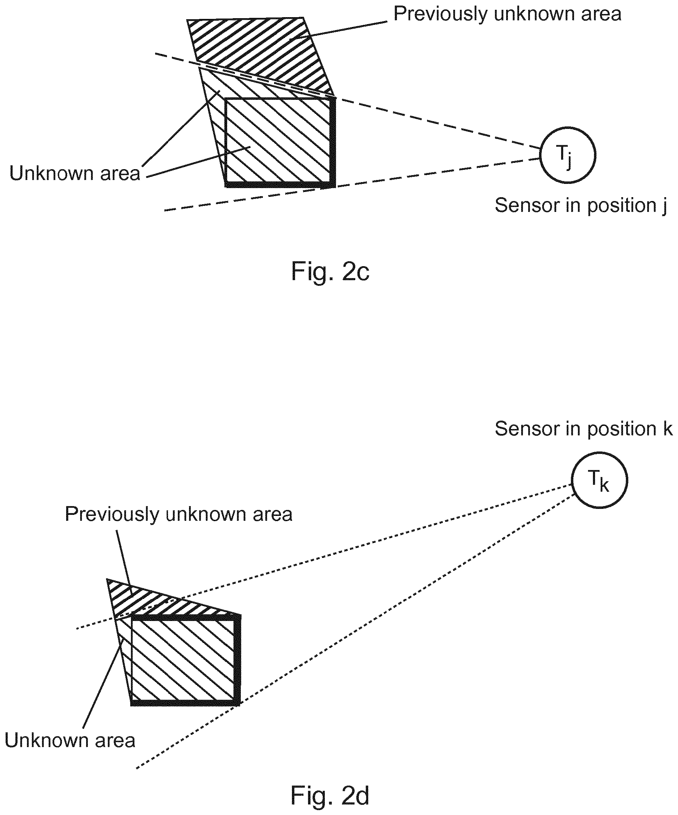

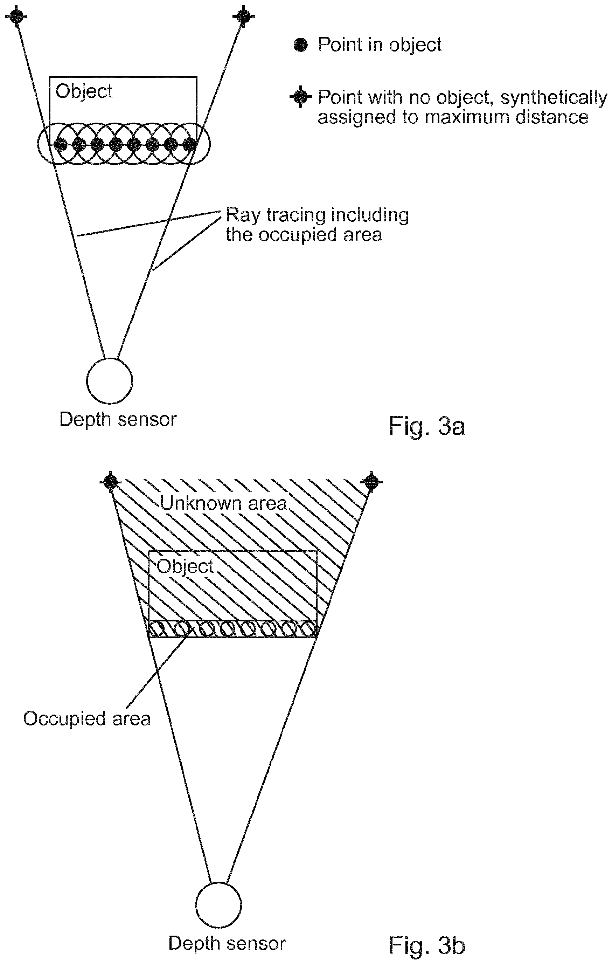

Figs. 1-4 relate to an apparatus, system and method for determining an occupancy map. In an example, the apparatus for determining an occupancy map comprises an input unit, and a processing unit. The input unit is configured to provide the processing unit with a plurality of datasets of an object. The plurality of datasets has been acquired by a sensor positioned at a plurality of different locations, and each individual dataset was acquired at a different location. Data in each of the plurality of datasets comprises distance information from the sensor to the object. For a first location of the sensor the object is subtended by a first plurality of subtending lines extending from the first location to and through the object, and for the first location a first dataset was acquired. The processing unit is configured to process the first dataset to determine a free area comprising a first free sub-area. The first free sub-area comprises an area within a first plurality of lines extending from the first location that are different to the first plurality of subtending lines and comprises an area within the first plurality of subtending lines between the first location and the object. Thus, referring to Fig. 2a the first free sub-area is the area in the triangle extending from the sensor position to the front corners of the object in front of the object and the areas either side of the triangle. The processing unit is configured also to process the first dataset to determine an outer extent of the object that surrounds an object area, the outer extent of the object comprising a first object sub-extent of the object subtended by the first plurality of subtending lines. Thus, as shown in Fig. 2a and in Figs. 3a and 3b, only the front surface of the object can be seen, which could be a real 3D surface or that 3D surface projected in a top down manner into a 2D area. However, this region is the first object sub-extent, and can be a straight or curved line with no thickness or a straight or curved line with a thickness and as such be an actual area. The processing unit is configured also to process the first dataset to determine an unknown area comprising a first unknown sub-area as an area other than the first free sub-area and the first object sub-extent. Referring to Fig. 2a and Figs. 3a and 3b, this is the area in the triangle extending from the sensor to the corners of the object that is behind the front surface/area (the first object sub-extent) and that the sensor cannot see. The object is actually a rectangle in this example, but from the data acquired by the sensor from the first location this cannot be determined, and thus the area that is behind the first object sub-extent is allocated as a first unknown sub-area. For a second location of the sensor the object is subtended by a second plurality of subtending lines extending from the second location to and through the object, and for the second location a second dataset was acquired. This is for example shown in Fig. 2b. The processing unit is configured to process the second dataset to determine a second free sub-area. The second free sub-area comprises an area within a second plurality of lines extending from the second location that are different to the second plurality of subtending lines and comprises an area within the second plurality of subtending lines between the second location and the object. Thus, referring to Fig. 2b the second free sub-area is the area in the "triangle " extending from the sensor position to the bottom left corner of the object to the corner facing the sensor and to the top right corner of the object that is in front of the object and the areas either side of the triangle. The processing unit is configured to process the second dataset to determine a second object sub-extent of the object subtended by the second plurality of subtending lines. Referring to Fig. 2b this is the bottom surface/area of the object (the first object sub-extent) and the side surface area of the object - in this example, and the second object sub-extent need not include the first object sub-extent and for example the second sensor acquisition could have been that as shown in Fig. 2c. The processing unit is configured to process the second dataset to determine a second unknown sub-area as an area other than the second free sub-area and the second object sub-extent. Again, this is everything behind the object that cannot be seen, and is not actually shown in the figures for the second acquisition, but is in effect as shown in Fig. 2a but for the position of Fig. 2b. The processing unit is configured to determine an updated free area, an updated outer extent of the object, and an updated unknown area. The updated free area is determined as an area that is covered by the first free sub-area and the second free sub-area. This is shown in Fig. 2b, where an area that was an unknown area has now become a free area in addition to what was already known to be a free area - this extra part of the free area is termed the "previously unknown area" in Fig. 2b. The updated outer extent of the object comprises the first object sub-extent and the second object sub-extent. The updated unknown area is determined as an area other than the updated free area and the updated outer extent of the object. This is shown in Fig. 2b as the "unknown area". The processing unit is configured to generate an occupancy map comprising utilization of the updated free area, the updated outer extent of the object and the updated unknown area.

The orientation of the sensor for each of the locations is known with respect to the orientations at the other locations, and the relative translation from one location to the next location is known.

The processing unit is configured to determine a dynamic object area to account for movement of the object; and wherein the processing unit is configured to generate the occupancy map comprising utilization of the dynamic object area.

The dynamic object area comprises an area that is a sub-set of the first object sub-extent and is a sub-set of the second free sub-area.

An area of the occupancy map is re-qualified as a dynamic object area.

According to an example, the dynamic object area comprises an area that is a sub-set of the first free sub-area and is a sub-set of the second object sub-extent.

In an example, an area of the occupancy map is re-qualified as a dynamic object area.

According to an example, the plurality of datasets comprises 3D information.

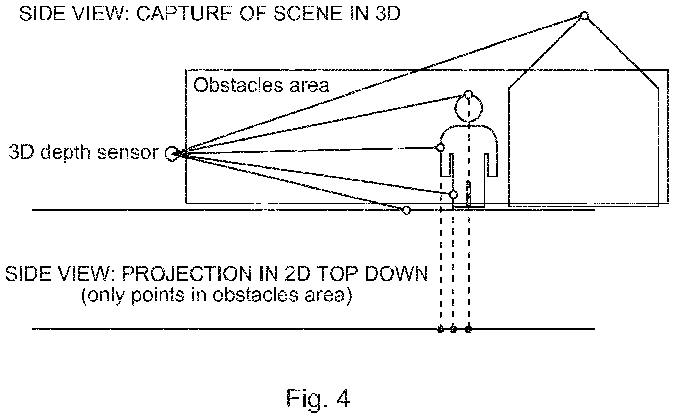

According to an example, the processing unit is configured to pre-process the 3D information to determine projected 2D information. This is shown in Fig. 4 and explained in more detail below.

According to an example, the plurality of datasets comprises 2D information.

In an example, the sensor is one of: a laser sensor, a radar sensor, an ultrasonic sensor, a stereo vision sensor.

Thus, 2D information can itself be acquired, via for example a simple radar sensor that gives a single distance for each angular line of sight in the horizontal plane.

The processing unit is configured to utilize the plurality of datasets and associated plurality of locations of the sensor to iteratively update the free area, the outer extent of the object and the unknown area comprising utilization of associated determined free sub-areas, and object sub-extents for each of the plurality of datasets acquired and associated plurality of locations. This is shown in Figs. 2a-2d, where the outer extent of the object need not be completely closed (or can be completely) and can have an unknown area in the middle, because that area is never actually sensed.

The processing unit is configured to iteratively update the dynamic object area.

Thus, the apparatus can operate in an offline mode, and utilize sensor data to determine the occupancy map.

However, a system for determining an occupancy map can include a sensor, and the apparatus for determining an occupancy map as described above; and also have an output unit. The sensor is configured to acquire the plurality of data sets, and the output unit is configured to output the occupancy map.

Also, an example relates to a method for determining an occupancy map, comprising:
a) acquiring by a sensor positioned at a plurality of different locations a plurality of datasets of an object, wherein each dataset is acquired at a different location, wherein data in each of the plurality of datasets comprises distance information from the sensor to the object;
b) providing a processing unit with a plurality of datasets of the object;
   wherein for a first location of the sensor the object is subtended by a first plurality of subtending lines extending from the first location to and through the object, and wherein for the first location a first dataset was acquired, and wherein the method comprises:
   c) processing by the processing unit the first dataset to determine a free area comprising a first free sub-area, wherein the first free sub-area comprises an area within a first plurality of lines extending from the first location that are different to the first plurality of subtending lines and comprises an area within the first plurality of subtending lines between the first location and the object;
   d) processing by the processing unit the first dataset to determine an outer extent of the object that surrounds an object area, the outer extent of the object comprising a first object sub-extent of the object subtended by the first plurality of subtending lines;
   e) processing by the processing unit the first dataset to determine an unknown area comprising a first unknown sub-area as an area other than the first free sub-area and the first object sub-extent;
      wherein, for a second location of the sensor the object is subtended by a second plurality of subtending lines extending from the second location to and through the object, and wherein for the second location a second dataset was acquired, and wherein the method comprises:
      f) processing by the processing unit the second dataset to determine a second free sub-area, wherein the second free sub-area comprises an area within a second plurality of lines extending from the second location that are different to the second plurality of subtending lines and comprises an area within the second plurality of subtending lines between the second location and the object;
      g) processing by the processing unit the second dataset to determine a second object sub-extent of the object subtended by the second plurality of subtending lines;
      h) processing by the processing unit the second dataset to determine a second unknown sub-area as an area other than the second free sub-area and the second object sub-extent;
      i) determining by the processing unit an updated free area as an area that is covered by the first free sub-area and the second free sub-area;
      j) determining by the processing unit updated outer extent of the object as an area that comprises the first object sub-extent and the second object sub-extent;
      k) determining by the processing area an updated unknown area as an area other than the updated free area and the updated outer extent of the object; and
      m) generating by the processing unit an occupancy map utilizing the updated free area, the updated outer extent of the object and the updated unknown area.

In step a) the orientation of the sensor for each of the locations is known with respect to the orientations at the other locations, and wherein the relative translation from one location to the next location is known.

The method comprises step I) determining by the processing unit a dynamic object area to account for movement of the object; and wherein step m) comprises generating the occupancy map comprising utilization of the dynamic object area.

The dynamic object area comprises an area that is a sub-set of the first object sub-extent and is a sub-set of the second free sub-area.

In an example, the dynamic object area comprises an area that is a sub-set of the first free sub-area and is a sub-set of the second object sub-extent.

In an example, the plurality of datasets comprises 3D information.

In an example, the processing unit is configured to pre-process the 3D information to determine projected 2D information.

In an example, the plurality of datasets comprises 2D information.

In an example, the sensor is one of: a laser sensor, a radar sensor, an ultrasonic sensor, a stereo vision sensor.

The method comprises utilizing the plurality of datasets and associated plurality of locations of the sensor to iteratively update the free area, the outer extent of the object and the unknown area comprising utilization of associated determined free sub-areas, and object sub-extents for each of the plurality of datasets acquired and associated plurality of locations.

The method comprises iteratively updating the dynamic object area.

Thus, the present system solves problems such as:
Maps generated by depth sensors, both 3D and 2D, have not until now contained enough information to be considered as accurate ground truth data for evaluation of ADAS algorithms. Specifically, in known techniques to determine occupancy maps, depth points detected by the sensor can be represented as an occupied area on a non-represented background, which is considered as unknown space. In particular since the maps, both 3D and 2D, represent only seen points, which belong to occupied space, then the background or non-represented area is the second area class, which represent free space and unseen space in the same way. When an ADAS algorithm contains a 3D point corresponding to a non-represented area in the ground truth map, then the point is incorrectly evaluated, because that area could be both free or unknown. The occupancy maps are built merging consecutive captures, and as such objects can move between two captures (termed, dynamic objects). Thus, in existing techniques to determine occupancy maps, the dynamic object is represented as points in the final occupancy map. Therefore, when an ADAS algorithm does not produce a 3D point in the dynamic area, the area is incorrectly evaluating by the algorithm as a false negative, that is, it was expected that a point should be in that area. In other words, existing techniques of determining occupancy maps are incorrectly determining the object as being too large, as it exists at all positions in time, when actually it has moved. Thus, it is only an occupied area, that is only a small subset of the whole captured scenario, that can be used as ground truth, and the non-represented area (which usually is the biggest part of the scenario) cannot be used. Because of this missed usage of the captured information, the evaluation of ADAS algorithms, in terms of score, KPI, or any metric, may show lower performance than it should. Thus, the apparatus, system and method for determining an occupancy map addresses these issues, by separating unknown from free space, and separating occupied (object area) from dynamically occupied dynamic object area) space.

Thus, as seen from Figs. 1-4, based on ray tracing of the multi-beam lidar, or the trajectory of each beam in any depth sensor, the 2D mapping reduces the boundaries of the non-represented area iteratively through consecutive captures taken from different poses (position and orientation) of the sensor. The result is a 2D occupancy map. which is not binary as for known techniques to determine occupancy maps that only have occupied and unknown areas, but contains four area classes: occupied, dynamically occupied, free, and unknown.

In a detailed embodiment, the method starts with an empty 2D map, where all is unknown, and has 4 steps:

### 1. New binary 2D capture.

A capture is taken from the sensor in a different position from the previous one. If it is a 3D sensor then the point cloud is transformed into a top-down projection, as shown in Fig. 4. This is done by keeping only the 3D points inside the obstacle area, which is defined with a minimum and maximum height. Then these points remove its height coordinate, so they are projected into the ground with height equal to zero. Otherwise, if it is a 2D depth sensor, the top-down projection is already obtained by default. The 2D top-down projection represents separated points, and they are merged into clusters (shapes, polygons around the points), as shown in Figs. 3a and 3b. The occupied area is composed by joining all points detected if they are closer than a distance threshold, which is a parameter depending on the horizontal resolution of the depth sensor. For example, if two points are closer than 2 cm, then they compose into a line of occupied area between both of them. The unknown area is composed taking into account the region behind the occupied area limited by the two rays tracing that includes the occupied area but have a very different distance detected (for example infinite if they detect no object) - these are the extreme sides of the triangle shown in figs. 3a and 3b. The result of this stage is a 2D plane with areas, instead of points, which are occupied (because there is an object returning some distance from the sensor).

### 2. Compute ray trajectories.

Based on the current position of the sensor, two ray traces can be projected onto the capture from that position until the maximum range of the sensor, passing through the two extreme points of the occupied area. In this way, the occupied area is completely inside the two rays. The result of this stage is a division of the circular capture:
- the section between the two rays, and the section outside.
- the section inside is divided by the occupied area, in the area in front of it, and the area behind it.

### 3. Classification.

The non-represented area of the capture (what is not occupied area) within the maximum range of the sensor is classified into free or unknown areas, apart from the occupied area which is already defined by the capture. It is free area outside the two rays trajectories, and also the part which is inside and between the sensor and the occupied area. It is unknown area within the two rays, but behind the occupied area. As a result of this stage, the capture contains now 3 different classes areas: occupied area, free area, and unknown area.

### 4. Integrate map.

The classified capture is integrated into the current map by accumulating information and overlapping areas. If an unknown area in the map receives from the capture an occupied area in the same position, then the map in that area becomes occupied. If an unknown area in the map receives from the capture a free area in the same position, then the map in that area becomes free. If an occupied area in the map receives from the capture a free area in the same position, then the map in that area becomes dynamically occupied. If a free area in the map receives from the capture an occupied area in the same position, then the map in that area becomes dynamically occupied. For any other combination, the processing unit is not changing the status in that area.

As a result of this stage, the occupancy map has i) increased the size because the position of the sensor has changed, so the maximum range is outside the current map; and ii) has updated its areas, and now can contains 4 different classes: occupied, dynamically occupied, free, and unknown.

These steps are repeated if new captures are received.

In this way, the 2D occupancy map contains more information, instead of having occupied versus non-represented space (binary), now it contains four classes: occupied, dynamically occupied, free, and unknown space. The free space is separated from unknown space, and dynamic objects are separated from static occupied spaces. As a 2D occupancy Map is generated, the size of the data is low, and is easy to store and process (for example, in embedded systems). The 2D Map occupancy map determined contains a smaller unknown area than existing methods. The occupancy man is richer in information with respect to ground truth, and therefore provides for more accurate performance KPI assessment and evaluation of ADAS algorithms.

In another embodiment, a computer program or computer program element is provided that is characterized by being configured to execute the method steps of the method according to one of the preceding embodiments, on an appropriate system.

The computer program element might therefore be stored on a computer unit, which might also be part of an embodiment. This computing unit is reconfigured to perform or induce performing of the steps of the method described above. Moreover, it is configured to operate the components of the above described apparatus and/or system. The computing unit can be configured to operate automatically and/or to execute the orders of a user. A computer program may be loaded into a working memory of a data processor. The data processor may thus be equipped to carry out the method according to one of the preceding embodiments.

According to a further exemplary embodiment of the present invention, a computer readable medium, such as a CD-ROM, is presented wherein the computer readable medium has a computer program element stored on it which computer program element is described by the preceding section.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. An apparatus for determining an occupancy map, comprising:
- an input unit; and
- a processing unit;
wherein, the input unit is configured to provide the processing unit with a plurality of datasets of an object, wherein the plurality of datasets was acquired by a sensor positioned at a plurality of different locations, wherein each dataset was acquired at a different location, wherein data in each of the plurality of datasets comprises distance information from the sensor to the object, wherein the sensor is a multi-beam sensor;
wherein, for a first location of the sensor the object is subtended by a first plurality of subtending lines extending from the first location to and through the object, and wherein for the first location a first dataset was acquired, wherein the subtending lines are rays extending from the multi-beam sensor;
wherein the processing unit is configured to process the first dataset to determine a free area comprising a first free sub-area, wherein the first free sub-area comprises an area within a first plurality of lines extending from the first location that are different to the first plurality of subtending lines and comprises an area within the first plurality of subtending lines between the first location and the object;
wherein, the processing unit is configured to process the first dataset to determine an outer extent of the object that surrounds an object area, the outer extent of the object comprising a first object sub-extent of the object subtended by the first plurality of subtending lines;
wherein the processing unit is configured to process the first dataset to determine an unknown area comprising a first unknown sub-area as an area other than the first free sub-area and the first object sub-extent;
wherein, for a second location of the sensor the object is subtended by a second plurality of subtending lines extending from the second location to and through the object, and wherein for the second location a second dataset was acquired;
wherein the processing unit is configured to process the second dataset to determine a second free sub-area, wherein the second free sub-area comprises an area within a second plurality of lines extending from the second location that are different to the second plurality of subtending lines and comprises an area within the second plurality of subtending lines between the second location and the object;
wherein, the processing unit is configured to process the second dataset to determine a second object sub-extent of the object subtended by the second plurality of subtending lines;
wherein the processing unit is configured to process the second dataset to determine a second unknown sub-area as an area other than the second free sub-area and the second object sub-extent; and
wherein, the processing unit is configured to determine an updated free area, an updated outer extent of the object, and an updated unknown area;
wherein, the updated free area is determined as an area that is covered by the first free sub-area and the second free sub-area;
wherein, the updated outer extent of the object comprises the first object sub-extent and the second object sub-extent;
wherein, the updated unknown area is determined as an area other than the updated free area and the updated outer extent of the object; and
wherein, the processing unit is configured to generate an occupancy map comprising utilization of the updated free area, the updated outer extent of the object and the updated unknown area, wherein the processing unit is configured to determine a dynamic object area to account for movement of the object; and wherein the processing unit is configured to generate the occupancy map comprising utilization of the dynamic object area and wherein the dynamic object area comprises an area that is a sub-set of the first object sub-extent and is a sub-set of the second free sub-area,
wherein the sub-set of the first object sub-extent and the sub-set of the second free sub-area is derived by accumulating information and overlapping areas, wherein the orientation of the sensor for each of the locations is known with respect to the orientations at the other locations, and wherein the relative translation from one location to the next location is known and wherein the processing unit is configured to utilize the plurality of datasets and associated plurality of locations of the sensor to iteratively update the free area, the outer extent of the object and the unknown area comprising utilization of associated determined free sub-areas, and object sub-extents for each of the plurality of datasets acquired and associated plurality of locations, wherein the occupancy map is determined for the evaluation of algorithms utilized in advanced driving assistance systems, and whereinthe processing unit is configured to iteratively update the dynamic object area.

2. Apparatus according to claim 1, wherein the dynamic object area comprises an area that is a sub-set of the first free sub-area and is a sub-set of the second object sub-extent.

3. Apparatus according to any of claims 1-2, wherein the plurality of datasets comprises 3D information.

4. Apparatus according to claim 3, wherein the processing unit is configured to pre-process the 3D information to determine projected 2D information.

5. Apparatus according to any of claims 1-4, wherein the plurality of datasets comprises 2D information.

6. System for determining an occupancy map, comprising:
- a sensor;
- an apparatus for determining an occupancy map according to any of claims 1-5; and
- an output unit;
wherein, the sensor is configured to acquire the plurality of data sets; and
wherein, the output unit is configured to output the occupancy map.

7. A method for determining an occupancy map, comprising:
a) acquiring by a sensor positioned at a plurality of different locations a plurality of datasets of an object, wherein each dataset is acquired at a different location, wherein data in each of the plurality of datasets comprises distance information from the sensor to the object, wherein the sensor is a multi-beam sensor;
b) providing a processing unit with a plurality of datasets of the object;
wherein for a first location of the sensor the object is subtended by a first plurality of subtending lines extending from the first location to and through the object, wherein the subtending lines are rays extending from the multi-beam sensor, and wherein for the first location a first dataset was acquired, and wherein the method comprises:
c) processing by the processing unit the first dataset to determine a free area comprising a first free sub-area, wherein the first free sub-area comprises an area within a first plurality of lines extending from the first location that are different to the first plurality of subtending lines and comprises an area within the first plurality of subtending lines between the first location and the object;
d) processing by the processing unit the first dataset to determine an outer extent of the object that surrounds an object area, the outer extent of the object comprising a first object sub-extent of the object subtended by the first plurality of subtending lines;
e) processing by the processing unit the first dataset to determine an unknown area comprising a first unknown sub-area as an area other than the first free sub-area and the first object sub-extent;
wherein, for a second location of the sensor the object is subtended by a second plurality of subtending lines extending from the second location to and through the object, and wherein for the second location a second dataset was acquired, and wherein the method comprises:
f) processing by the processing unit the second dataset to determine a second free sub-area, wherein the second free sub-area comprises an area within a second plurality of lines extending from the second location that are different to the second plurality of subtending lines and comprises an area within the second plurality of subtending lines between the second location and the object;
g) processing by the processing unit the second dataset to determine a second object sub-extent of the object subtended by the second plurality of subtending lines;
h) processing by the processing unit the second dataset to determine a second unknown sub-area as an area other than the second free sub-area and the second object sub-extent;
i) determining by the processing unit an updated free area as an area that is covered by the first free sub-area and the second free sub-area;
j) determining by the processing unit updated outer extent of the object as an area that comprises the first object sub-extent and the second object sub-extent;
k) determining by the processing area an updated unknown area as an area other than the updated free area and the updated outer extent of the object; and
m) generating by the processing unit an occupancy map utilizing the updated free area, the updated outer extent of the object and the updated unknown area, wherein the processing unit is configured to determine a dynamic object area to account for movement of the object; and wherein the processing unit is configured to generate the occupancy map comprising utilization of the dynamic object area and wherein the dynamic object area comprises an area that is a sub-set of the first object sub-extent and is a sub-set of the second free sub-area,
wherein the sub-set of the first object sub-extent and the sub-set of the second free sub-area is derived by accumulating information and overlapping areas, wherein the orientation of the sensor for each of the locations is known with respect to the orientations at the other locations, and wherein the relative translation from one location to the next location is known and wherein the processing unit is configured to utilize the plurality of datasets and associated plurality of locations of the sensor to iteratively update the free area, the outer extent of the object and the unknown area comprising utilization of associated determined free sub-areas, and object sub-extents for each of the plurality of datasets acquired and associated plurality of locations, wherein the occupancy map is determined for the evaluation of algorithms utilized in advanced driving assistance systems, and whereinthe processing unit is configured to iteratively update the dynamic object area.

8. Method according to claim 7, wherein the method comprises utilizing the plurality of datasets and associated plurality of locations of the sensor to iteratively update the free area, the outer extent of the object and the unknown area comprising utilization of associated determined free sub-areas, and object sub-extents for each of the plurality of datasets acquired and associated plurality of locations.

9. A computer program element for controlling an apparatus according to any one of claims 1 to 5 and/or a system according to claim 7, which when executed by a processor is configured to carry out the method of any of claims 7-8.

## Patentansprüche

1. Vorrichtung zum Bestimmen einer Belegungskarte, die Folgendes aufweist:
- eine Eingabeeinheit; und
- eine Verarbeitungseinheit;
wobei die Eingabeeinheit ausgebildet ist zum Versorgen der Verarbeitungseinheit mit einer Vielzahl von Datensätzen eines Objekts, wobei die Vielzahl von Datensätzen durch einen Sensor erfasst wurde, der an einer Vielzahl von unterschiedlichen Standorten positioniert ist, wobei jeder Datensatz an einem anderen Standort erfasst wurde, wobei Daten in jedem der Vielzahl von Datensätzen Entfernungsinformationen von dem Sensor zu dem Objekt aufweisen, wobei es sich bei dem Sensor um einen Mehrstrahlsensor handelt; wobei für einen ersten Standort des Sensors das Objekt von einer ersten Vielzahl von Begrenzungslinien begrenzt wird, die sich von dem ersten Standort zu und durch das Objekt erstrecken, und wobei für den ersten Standort ein erster Datensatz erfasst wurde, wobei die Begrenzungslinien Strahlen sind, die sich von dem Mehrstrahlsensor erstrecken;
wobei die Verarbeitungseinheit ausgebildet ist zum Verarbeiten des ersten Datensatzes, um einen freien Bereich zu bestimmen, der einen ersten freien Teilbereich aufweist, wobei der erste freie Teilbereich einen Bereich innerhalb einer ersten Vielzahl von Linien aufweist, die sich von dem ersten Standort erstrecken und die sich von der ersten Vielzahl von Begrenzungslinien unterscheiden, und einen Bereich innerhalb der ersten Vielzahl von Begrenzungslinien zwischen dem ersten Standort und dem Objekt aufweist; wobei die Verarbeitungseinheit ausgebildet ist zum Verarbeiten des ersten Datensatzes, um eine äußere Ausdehnung des Objekts zu bestimmen, die einen Objektbereich umgibt, wobei die äußere Ausdehnung des Objekts eine erste Objektteilausdehnung des Objekts aufweist, die von der ersten Vielzahl von Begrenzungslinien begrenzt wird;
wobei die Verarbeitungseinheit ausgebildet ist zum Verarbeiten des ersten Datensatzes, um einen unbekannten Bereich zu bestimmen, der einen ersten unbekannten Teilbereich als einen anderen Bereich als den ersten freien Teilbereich und die erste Objektteilausdehnung aufweist;
wobei für einen zweiten Standort des Sensors das Objekt von einer zweiten Vielzahl von Begrenzungslinien begrenzt wird, die sich von dem zweiten Standort zu und durch das Objekt erstrecken, und wobei für den zweiten Standort ein zweiter Datensatz erfasst wurde;
wobei die Verarbeitungseinheit ausgebildet ist zum Verarbeiten des zweiten Datensatzes, um einen zweiten freien Teilbereich zu bestimmen, wobei der zweite freie Teilbereich einen Bereich innerhalb einer zweiten Vielzahl von Linien aufweist, die sich von dem zweiten Standort aus erstrecken und sich von der zweiten Vielzahl von Begrenzungslinien unterscheiden, und einen Bereich innerhalb der zweiten Vielzahl von Begrenzungslinien zwischen dem zweiten Standort und dem Objekt aufweist;
wobei die Verarbeitungseinheit ausgebildet ist zum Verarbeiten des zweiten Datensatzes, um eine zweite Objektteilausdehnung des Objekts zu bestimmen, die von der zweiten Vielzahl von Begrenzungslinien begrenzt wird;
wobei die Verarbeitungseinheit ausgebildet ist zum Verarbeiten des zweiten Datensatzes, um einen zweiten unbekannten Teilbereich als einen anderen Bereich als der zweite freie Teilbereich und der zweite Objektteilbereich zu bestimmen; und
wobei die Verarbeitungseinheit ausgebildet ist zum Bestimmen eines aktualisierten freien Bereichs, einer aktualisierten äußeren Ausdehnung des Objekts und eines aktualisierten unbekannten Bereichs;
wobei der aktualisierte freie Bereich als ein Bereich bestimmt wird, der durch den ersten freien Teilbereich und den zweiten freien Teilbereich abgedeckt ist;
wobei die aktualisierte äußere Ausdehnung des Objekts die erste Objektteilausdehnung und die zweite Objektteilausdehnung aufweist;
wobei der aktualisierte unbekannte Bereich als ein anderer Bereich als der aktualisierte freie Bereich und die aktualisierte äußere Ausdehnung des Objekts bestimmt wird; und
wobei die Verarbeitungseinheit ausgebildet ist zum Erzeugen einer Belegungskarte, die eine Nutzung des aktualisierten freien Bereichs, der aktualisierten äußeren Ausdehnung des Objekts und des aktualisierten unbekannten Bereichs umfasst, wobei die Verarbeitungseinheit ausgebildet ist zum Bestimmen eines dynamischen Objektbereichs, um eine Bewegung des Objekts zu berücksichtigen; und wobei die Verarbeitungseinheit ausgebildet ist zum Erzeugen der Belegungskarte, die eine Nutzung des dynamischen Objektbereichs umfasst, und wobei der dynamische Objektbereich einen Bereich aufweist, der eine Teilmenge der ersten Objektteilausdehnung ist und eine Teilmenge des zweiten freien Teilbereichs ist,
wobei die Teilmenge der ersten Objektteilausdehnung und die Teilmenge des zweiten freien Teilbereichs durch Akkumulieren von Informationen und überlappenden Bereichen abgeleitet wird, wobei die Ausrichtung des Sensors für jeden der Standorte in Bezug auf die Ausrichtungen an den anderen Standorten bekannt ist, und wobei die relative Translation von einem Standort zum nächsten Standort bekannt ist, und wobei die Verarbeitungseinheit ausgebildet ist zum Verwenden der Vielzahl von Datensätzen und der zugehörigen Vielzahl von Standorten des Sensors zum iterativen Aktualisieren des freien Bereichs, der äußeren Ausdehnung des Objekts und des unbekannten Bereichs, das eine Nutzung zugehöriger bestimmter freier Teilbereiche und Objektteilausdehnungen für jeden der Vielzahl erfasster Datensätze und der zugehörigen Vielzahl von Standorten umfasst, wobei die Belegungskarte für die Evaluierung von Algorithmen bestimmt wird, die in hochentwickelten Fahrassistenzsystemen verwendet werden, und wobei die Verarbeitungseinheit ausgebildet ist zum iterativen Aktualisieren des dynamischen Objektbereichs.

2. Vorrichtung nach Anspruch 1, wobei der dynamische Objektbereich einen Bereich umfasst, bei dem es sich um eine Teilmenge des ersten freien Teilbereichs und um eine Teilmenge der zweiten Objektteilausdehnung handelt.

3. Vorrichtung nach einem der Ansprüche 1 und 2, wobei die Vielzahl von Datensätzen 3D-Informationen aufweist.

4. Vorrichtung nach Anspruch 3, wobei die Verarbeitungseinheit ausgebildet ist zum Vorverarbeiten der 3D-Informationen, um projizierte 2D-Informationen zu bestimmen.

5. Vorrichtung nach einem der Ansprüche 1 bis 4, wobei die Vielzahl von Datensätzen 2D-Informationen aufweist.

6. System zum Bestimmen einer Belegungskarte, das Folgendes aufweist:
- einen Sensor;
- eine Vorrichtung zum Bestimmen einer Belegungskarte nach einem der Ansprüche 1 bis 5; und
- eine Ausgabeeinheit;
wobei der Sensor ausgebildet ist zum Erfassen der Vielzahl von Datensätzen; und wobei die Ausgabeeinheit ausgebildet ist zum Ausgeben der Belegungskarte.

7. Verfahren zum Bestimmen einer Belegungskarte, umfassend:
a) Erfassen einer Vielzahl von Datensätzen eines Objekts durch einen Sensor, der an einer Vielzahl verschiedener Standorte positioniert ist, wobei jeder Datensatz an einem anderen Standort erfasst wird, wobei Daten in jedem der Vielzahl von Datensätzen Entfernungsinformationen von dem Sensor zu dem Objekt aufweisen, wobei der Sensor ein Mehrstrahlsensor ist;
b) Versorgen einer Verarbeitungseinheit mit einer Vielzahl von Datensätzen des Objekts;
wobei für einen ersten Standort des Sensors das Objekt von einer ersten Vielzahl von Begrenzungslinien begrenzt wird, die sich von dem ersten Standort zu und durch das Objekt erstrecken, wobei die Begrenzungslinien Strahlen sind, die sich von dem Mehrstrahlsensor erstrecken, und wobei für den ersten Standort ein erster Datensatz erfasst wurde, und wobei das Verfahren umfasst:
c) Verarbeiten des ersten Datensatzes durch die Verarbeitungseinheit, um einen freien Bereich zu bestimmen, der einen ersten freien Teilbereich aufweist, wobei der erste freie Teilbereich einen Bereich innerhalb einer ersten Vielzahl von Linien aufweist, die sich von dem ersten Standort erstrecken und sich von der ersten Vielzahl von Begrenzungslinien unterscheiden, und einen Bereich innerhalb der ersten Vielzahl von Begrenzungslinien zwischen dem ersten Standort und dem Objekt aufweist;
d) Verarbeiten des ersten Datensatzes durch die Verarbeitungseinheit, um eine äußere Ausdehnung des Objekts zu bestimmen, die einen Objektbereich umgibt, wobei die äußere Ausdehnung des Objekts eine erste Objektteilausdehnung des Objekts aufweist, die von der ersten Vielzahl von Begrenzungslinien begrenzt wird;
e) Verarbeiten des ersten Datensatzes durch die Verarbeitungseinheit, um einen unbekannten Bereich zu bestimmen, der einen ersten unbekannten Teilbereich als einen anderen Bereich als der erste freie Teilbereich und der erste Objektteilbereich aufweist;
wobei für einen zweiten Standort des Sensors das Objekt von einer zweiten Vielzahl von Begrenzungslinien begrenzt wird, die sich von dem zweiten Standort zu und durch das Objekt erstrecken, und wobei für den zweiten Standort ein zweiter Datensatz erfasst wurde, und wobei das Verfahren umfasst:
f) Verarbeiten des zweiten Datensatzes durch die Verarbeitungseinheit, um einen zweiten freien Teilbereich zu bestimmen, wobei der zweite freie Teilbereich einen Bereich innerhalb einer zweiten Vielzahl von Linien umfasst, die sich von dem zweiten Standort erstrecken und sich von der zweiten Vielzahl von Begrenzungslinien unterscheiden, und einen Bereich innerhalb der zweiten Vielzahl von Begrenzungslinien zwischen dem zweiten Standort und dem Objekt aufweist;
g) Verarbeiten des zweiten Datensatzes durch die Verarbeitungseinheit, um eine zweite Objektteilausdehnung des Objekts zu bestimmen, die von der zweiten Vielzahl von Begrenzungslinien begrenzt wird;
h) Verarbeiten des zweiten Datensatzes durch die Verarbeitungseinheit, um einen zweiten unbekannten Teilbereich als einen anderen Bereich als der zweite freie Teilbereich und der zweite Objektteilbereich zu bestimmen;
i) Bestimmen eines aktualisierten freien Bereichs durch die Verarbeitungseinheit als ein Bereich, der von dem ersten freien Teilbereich und dem zweiten freien Teilbereich abgedeckt wird;
j) Bestimmen einer aktualisierten äußeren Ausdehnung des Objekts durch die Verarbeitungseinheit als einen Bereich, der die erste Objektteilausdehnung und die zweite Objektteilausdehnung aufweist;
k) Bestimmen eines aktualisierten unbekannten Bereichs durch die Verarbeitungseinheit als einen anderen Bereich als der aktualisierte freie Bereich und die aktualisierte äußere Ausdehnung des Objekts; und
m) Erzeugen einer Belegungskarte durch die Verarbeitungseinheit unter Verwendung des aktualisierten freien Bereichs, der aktualisierten äußeren Ausdehnung des Objekts und des aktualisierten unbekannten Bereichs, wobei die Verarbeitungseinheit ausgebildet ist zum Bestimmen eines dynamischen Objektbereichs, um eine Bewegung des Objekts zu berücksichtigen; und wobei die Verarbeitungseinheit ausgebildet ist zum Erzeugen der Belegungskarte, die eine Nutzung des dynamischen Objektbereichs umfasst, und wobei der dynamische Objektbereich einen Bereich aufweist, der eine Teilmenge der ersten Objektteilausdehnung ist und eine Teilmenge des zweiten freien Teilbereichs ist, wobei die Teilmenge der ersten Objektteilausdehnung und die Teilmenge des zweiten freien Teilbereichs durch Akkumulieren von Informationen und überlappenden Bereichen abgeleitet wird, wobei die Ausrichtung des Sensors für jeden der Standorte in Bezug auf die Ausrichtungen an den anderen Standorten bekannt ist, und wobei die relative Translation von einem Standort zum nächsten Standort bekannt ist, und wobei die Verarbeitungseinheit ausgebildet ist zum Verwenden der Vielzahl von Datensätzen und der zugehörigen Vielzahl von Standorten des Sensors zum iterativen Aktualisieren des freien Bereichs, der äußeren Ausdehnung des Objekts und des unbekannten Bereichs, das eine Nutzung zugehöriger bestimmter freier Teilbereiche und Objektteilausdehnungen für jeden der Vielzahl erfasster Datensätze und der zugehörigen Vielzahl von Standorten umfasst, wobei die Belegungskarte für die Evaluierung von Algorithmen bestimmt wird, die in hochentwickelten Fahrassistenzsystemen verwendet werden, und wobei die Verarbeitungseinheit ausgebildet ist zum iterativen Aktualisieren des dynamischen Objektbereichs.

8. Verfahren nach Anspruch 7, wobei das Verfahren das Nutzen der Vielzahl von Datensätzen und der zugehörigen Vielzahl von Standorten des Sensors umfasst, um iterativ den freien Bereich, die äußere Ausdehnung des Objekts und den unbekannten Bereich zu aktualisieren, umfassend die Nutzung zugehöriger bestimmter freier Teilbereiche und Objektteilausdehnungen für jeden der Vielzahl von erfassten Datensätzen und der zugehörigen Vielzahl von Standorten.

9. Computerprogrammelement zum Steuern einer Vorrichtung nach einem der Ansprüche 1 bis 5 und/oder eines Systems nach Anspruch 7, das bei Ausführung durch einen Prozessor ausgebildet ist zum Durchführen des Verfahrens nach einem der Ansprüche 7 und 8.

## Revendications

1. Appareil de détermination d'une carte d'occupation, comprenant :
- une unité d'entrée ; et
- une unité de traitement ;
l'unité d'entrée étant configurée pour fournir à l'unité de traitement une pluralité d'ensembles de données d'un objet, la pluralité d'ensembles de données ayant été acquis par un capteur positionné à une pluralité d'emplacements différents, chaque ensemble de données ayant été acquis à un emplacement différent, des données dans chacun de la pluralité d'ensembles de données comprenant des informations de distance depuis le capteur jusqu'à l'objet, le capteur étant un capteur multifaisceau ;
pour un premier emplacement du capteur, l'objet étant sous-tendu par une première pluralité de lignes sous-tendantes s'étendant depuis le premier emplacement jusqu'à et à travers l'objet et, pour le premier emplacement, un premier ensemble de données ayant été acquis, les lignes sous-tendantes étant des rayons s'étendant depuis le capteur multifaisceau ;
l'unité de traitement étant configurée pour traiter le premier ensemble de données pour déterminer une zone libre comprenant une première sous-zone libre, la première sous-zone libre comprenant une zone à l'intérieur d'une première pluralité de lignes s'étendant depuis le premier emplacement qui sont différentes de la première pluralité de lignes sous-tendantes et comprenant une zone à l'intérieur de la première pluralité de lignes sous-tendantes entre le premier emplacement et l'objet ;
l'unité de traitement étant configurée pour traiter le premier ensemble de données pour déterminer une étendue extérieure de l'objet qui entoure une zone d'objet, l'étendue extérieure de l'objet comprenant une première sous-étendue d'objet de l'objet sous-tendue par la première pluralité de lignes sous-tendantes ;
l'unité de traitement étant configurée pour traiter le premier ensemble de données pour déterminer une zone inconnue comprenant une première sous-zone inconnue comme une zone autre que la première sous-zone libre et la première sous-étendue d'objet ;
pour un deuxième emplacement du capteur, l'objet étant sous-tendu par une deuxième pluralité de lignes sous-tendantes s'étendant depuis le deuxième emplacement jusqu'à et à travers l'objet et, pour le deuxième emplacement, un deuxième ensemble de données ayant été acquis ;
l'unité de traitement étant configurée pour traiter le deuxième ensemble de données pour déterminer une deuxième sous-zone libre, la deuxième sous-zone libre comprenant une zone à l'intérieur d'une deuxième pluralité de lignes s'étendant depuis le deuxième emplacement qui sont différentes de la deuxième pluralité de lignes sous-tendantes et comprenant une zone à l'intérieur de la deuxième pluralité de lignes sous-tendantes entre le deuxième emplacement et l'objet ;
l'unité de traitement étant configurée pour traiter le deuxième ensemble de données pour déterminer une deuxième sous-étendue d'objet de l'objet sous-tendue par la deuxième pluralité de lignes sous-tendantes ;
l'unité de traitement étant configurée pour traiter le deuxième ensemble de données pour déterminer une deuxième sous-zone inconnue comme une zone autre que la deuxième sous-zone libre et la deuxième sous-étendue d'objet ; et l'unité de traitement étant configurée pour déterminer une zone libre actualisée, une étendue extérieure actualisée de l'objet, et une zone inconnue actualisée ;
la zone libre actualisée étant déterminée comme une zone qui est recouverte par la première sous-zone libre et la deuxième sous-zone libre ;
l'étendue extérieure actualisée de l'objet comprenant la première sous-étendue d'objet et la deuxième sous-étendue d'objet ;
la zone inconnue actualisée étant déterminée comme une zone autre que la zone libre actualisée et l'étendue extérieure actualisée de l'objet ; et
l'unité de traitement étant configurée pour générer une carte d'occupation comprenant l'utilisation de la zone libre actualisée, de l'étendue extérieure actualisée de l'objet et de la zone inconnue actualisée, l'unité de traitement étant configurée pour déterminer une zone d'objet dynamique pour tenir compte du mouvement de l'objet ; et l'unité de traitement étant configurée pour générer la carte d'occupation comprenant l'utilisation de la zone d'objet dynamique et la zone d'objet dynamique comprenant une zone qui est un sous-ensemble de la première sous-étendue d'objet et qui est un sous-ensemble de la deuxième sous-zone libre, le sous-ensemble de la première sous-étendue d'objet et le sous-ensemble de la deuxième sous-zone libre étant dérivés par accumulation d'informations et superposition de zones, l'orientation du capteur pour chacun des emplacements étant connue par rapport aux orientations aux autres emplacements, et la translation relative d'un emplacement à l'emplacement suivant étant connue et l'unité de traitement étant configurée pour utiliser la pluralité d'ensembles de données et la pluralité associée d'emplacements du capteur pour actualiser de manière itérative la zone libre, l'étendue extérieure de l'objet et la zone inconnue comprenant l'utilisation de sous-zones libres déterminées associées et de sous-étendues d'objet pour chacun de la pluralité d'ensembles de données acquis et de la pluralité associée d'emplacements, la carte d'occupation étant déterminée pour l'évaluation d'algorithmes utilisés dans des systèmes avancés d'aide à la conduite, et l'unité de traitement étant configurée pour actualiser de manière itérative la zone d'objet dynamique.

2. Appareil selon la revendication 1, dans lequel la zone d'objet dynamique comprend une zone qui est un sous-ensemble de la première sous-zone libre et qui est un sous-ensemble de la deuxième sous-étendue d'objet.

3. Appareil selon l'une quelconque des revendications 1 à 2, dans lequel la pluralité d'ensembles de données comprennent des informations 3D.

4. Appareil selon la revendication 3, dans lequel l'unité de traitement est configurée pour prétraiter les informations 3D pour déterminer des informations 2D projetées.

5. Appareil selon l'une quelconque des revendications 1 à 4, dans lequel la pluralité d'ensembles de données comprennent des informations 2D.

6. Système de détermination d'une carte d'occupation, comprenant :
- un capteur ;
- un appareil de détermination d'une carte d'occupation selon l'une quelconque des revendications 1 à 5 ; et
- une unité de sortie ;
le capteur étant configuré pour obtenir la pluralité d'ensembles de données ; et l'unité de sortie étant configurée pour fournir en sortie la carte d'occupation.

7. Procédé de détermination d'une carte d'occupation, comprenant :
a) l'acquisition, par un capteur positionné à une pluralité d'emplacements différents, d'une pluralité d'ensembles de données d'un objet, chaque ensemble de données étant acquis à un emplacement différent, des données dans chacun de la pluralité d'ensembles de données comprenant des informations de distance depuis le capteur jusqu'à l'objet, le capteur étant un capteur multifaisceau ;
b) la fourniture à une unité de traitement d'une pluralité d'ensembles de données de l'objet ;
pour un premier emplacement du capteur, l'objet étant sous-tendu par une première pluralité de lignes sous-tendantes s'étendant depuis le premier emplacement jusqu'à et à travers l'objet, les lignes sous-tendantes étant des rayons s'étendant depuis le capteur multifaisceau et, pour le premier emplacement, un premier ensemble de données ayant été acquis, et le procédé comprenant :
c) le traitement, par l'unité de traitement, du premier ensemble de données pour déterminer une zone libre comprenant une première sous-zone libre, la première sous-zone libre comprenant une zone à l'intérieur d'une première pluralité de lignes s'étendant depuis le premier emplacement qui sont différentes de la première pluralité de lignes sous-tendantes et comprenant une zone à l'intérieur de la première pluralité de lignes sous-tendantes entre le premier emplacement et l'objet ;
d) le traitement, par l'unité de traitement, du premier ensemble de données pour déterminer une étendue extérieure de l'objet qui entoure une zone d'objet, l'étendue extérieure de l'objet comprenant une première sous-étendue d'objet de l'objet sous-tendue par la première pluralité de lignes sous-tendantes ;
e) le traitement, par l'unité de traitement, du premier ensemble de données pour déterminer une zone inconnue comprenant une première sous-zone inconnue comme une zone autre que la première sous-zone libre et la première sous-étendue d'objet ;
pour un deuxième emplacement du capteur, l'objet étant sous-tendu par une deuxième pluralité de lignes sous-tendantes s'étendant depuis le deuxième emplacement jusqu'à et à travers l'objet et, pour le deuxième emplacement, un deuxième ensemble de données ayant été acquis, et le procédé comprenant :
f) le traitement, par l'unité de traitement, du deuxième ensemble de données pour déterminer une deuxième sous-zone libre, la deuxième sous-zone libre comprenant une zone à l'intérieur d'une deuxième pluralité de lignes s'étendant depuis le deuxième emplacement qui sont différentes de la deuxième pluralité de lignes sous-tendantes et comprenant une zone à l'intérieur de la deuxième pluralité de lignes sous-tendantes entre le deuxième emplacement et l'objet ;
g) le traitement, par l'unité de traitement, du deuxième ensemble de données pour déterminer une deuxième sous-étendue d'objet de l'objet sous-tendue par la deuxième pluralité de lignes sous-tendantes ;
h) le traitement, par l'unité de traitement, du deuxième ensemble de données pour déterminer une deuxième sous-zone inconnue comme une zone autre que la deuxième sous-zone libre et la deuxième sous-étendue d'objet ;
i) la détermination, par l'unité de traitement, d'une zone libre actualisée comme une zone qui est recouverte par la première sous-zone libre et la deuxième sous-zone libre ;
j) la détermination, par l'unité de traitement, d'une étendue extérieure actualisée de l'objet comme une zone qui comprend la première sous-étendue d'objet et la deuxième sous-étendue d'objet ;
k) la détermination, par l'unité de traitement, d'une zone inconnue actualisée comme une zone autre que la zone libre actualisée et l'étendue extérieure actualisée de l'objet ; et
m) la génération, par l'unité de traitement, d'une carte d'occupation utilisant la zone libre actualisée, l'étendue extérieure actualisée de l'objet et la zone inconnue actualisée, l'unité de traitement étant configurée pour déterminer une zone d'objet dynamique pour tenir compte du mouvement de l'objet ; et l'unité de traitement étant configurée pour générer la carte d'occupation comprenant l'utilisation de la zone d'objet dynamique et la zone d'objet dynamique comprenant une zone qui est un sous-ensemble de la première sous-étendue d'objet et qui est un sous-ensemble de la deuxième sous-zone libre,
le sous-ensemble de la première sous-étendue d'objet et le sous-ensemble de la deuxième sous-zone libre étant dérivés par accumulation d'informations et superposition de zones, l'orientation du capteur pour chacun des emplacements étant connue par rapport aux orientations aux autres emplacements, et la translation relative d'un emplacement à l'emplacement suivant étant connue et l'unité de traitement étant configurée pour utiliser la pluralité d'ensembles de données et la pluralité associée d'emplacements du capteur pour actualiser de manière itérative la zone libre, l'étendue extérieure de l'objet et la zone inconnue comprenant l'utilisation de sous-zones libres déterminées associées et de sous-étendues d'objet pour chacun de la pluralité d'ensembles de données acquis et de la pluralité associée d'emplacements, la carte d'occupation étant déterminée pour l'évaluation d'algorithmes utilisés dans des systèmes avancés d'aide à la conduite, et l'unité de traitement étant configurée pour actualiser de manière itérative la zone d'objet dynamique.

8. Procédé selon la revendication 7, le procédé comprenant l'utilisation de la pluralité d'ensembles de données et de la pluralité associée d'emplacements du capteur pour actualiser de manière itérative la zone libre, l'étendue extérieure de l'objet et la zone inconnue comprenant l'utilisation de sous-zones libres déterminées associées et de sous-étendues d'objet pour chacun de la pluralité d'ensembles de données acquis et de la pluralité associée d'emplacements.

9. Élément de programme d'ordinateur pour commander un appareil selon l'une quelconque des revendications 1 à 5 et/ou un système selon la revendication 7 qui, lorsqu'il est exécuté par un processeur, est configuré pour mettre en oeuvre le procédé selon l'une quelconque des revendications 7 à 8.
